# EUROPEAN PATENT APPLICATION

(11) **EP 0 562 860 A1**
(43) Date of publication of application: **29.09.1993**
(21) Application number: 93302313.7
(22) Date of filing: 25.03.1993
(51) Int. Cl.: C08F 220/30, C08F 299/00, C09D 163/10, C09D 4/00

(54) **Radiation curable compounds and compositions**

(30) Priority: 26.03.1992 GB 9206560
(71) Applicant: SERICOL LIMITED, Broadstairs, Kent CT10 2PA (GB)
(72) Inventor: Gould, Nigel Paul, Broadstairs, Kent (GB)
(74) Representative: Lewis, Pauline Therese

(57) **Abstract**

Water soluble, radiation curable, esterified epoxy oligomers including acrylate or methacrylate groups, process for their production, and radiation curable compositions containing them. Oligomers of the invention can be used as binders in radiation curable varnish or lacquer formulations, or in compositions including a colorant, for example inks.

## Description

This invention relates to radiation curable acrylates and methacrylates, and to compositions containing them.

It is well known to coat compositions containing oligomeric epoxy resins esterified with acrylate or methacrylate groups onto substrates and thereafter to photocure the compositions. Various techniques have been used to apply the coatings, for example using roller coating or by lithographic or screen printing processes. However, since such coatings are essentially non-ionic, these compositions are usually difficult to remove from the coating equipment, it often being necessary to use strong and/or flammable solvents to remove them, for example cyclohexanone or methyl ethyl ketone. In addition, the weight of these hitherto proposed compositions applied in the coating process is usually adjusted by diluting the compositions with a monomer, but often at the expense of the gloss of the resultant photocured coatings.

According to the present invention there are provided water soluble, radiation curable epoxy acrylate and methacrylate oligomers.

The invention further provides radiation curable compositions comprising a water soluble oligomer in accordance with the invention, a mono- and/or multifunctional monomer, and a photoinitiator.

Water soluble oligomers in accordance with the invention are preferably ionomeric, and they preferably include quaternary amino groups, these groups generally serving to impart solubility to the oligomer. Water soluble oligomers in accordance with the present invention are preferably produced by quaternizing the corresponding amine-cured epoxy acrylate or methacrylate, for example by reacting the amine-cured epoxy acrylate or methacrylate with an acid or a Lewis acid. The quaternization is preferably substantially complete, but some unquaternized amino groups can be present.

Particularly preferred water soluble, radiation curable oligomers in accordance with the present invention can be prepared by initially reacting a difunctional epoxy compound with acrylic or methacrylic acid, preferably reacting about 22 to 27 percent of the epoxy groups present in the difunctional epoxy compound. Thereafter the partially reacted epoxy acrylate or methacrylate is reacted with insufficient of a secondary amine to effect complete reaction of the remaining epoxy groups, and preferably to react about a further 22 to 27 percent of the epoxy groups present in the original difunctional epoxy compound. The product is then reacted with sufficient of a primary diamine to effect reaction of a further 22 to 27 percent of the epoxy groups originally present in the difunctional epoxy compound. The resulting product is then finally reacted with a secondary amine to quench unreacted epoxy groups and to prevent such unreacted epoxy groups from undergoing further reaction which would increase the molecular weight of the resulting oligomer. Finally, the substantially esterified epoxy oligomer is quaternized by reacting the resin with an acid, preferably acrylic or methacrylic acid.

Preferred difunctional epoxy compounds include reaction products of Bisphenol A, Bisphenol F or Bisphenol S with epichlorhydrin, in particular having a molecular weight in the range of from 350 to 700 (n=0 to 2), and polyglycol diepoxides with molecular weights in the same range.

Examples of secondary amines which can be used in either reaction step involving the use of such an amine include N,N-diethylamine, N,N-dipropylamine, N,N-di-(isopropyl)amine, N,N-dibutylamine, N-(n-butyl)-N-(tert-butyl)amine, N-ethyl-N-(n-butyl)amine, N,N-di-(n-hexyl)amine, N,N-di-(n-octyl)-amine, N,N-di-(n-nonyl)amine, N-methyl-N-(n-octadecyl)amine, N,N-di-(n-dodecyl)amine, 1-(cyclohexylmethyl)-N-methyl-N-ethylamine, N,N-dicyclohexylamine, N-methyl-N-cyclohexylamine, and mixtures thereof.

Examples of primary diamines which can be used include 1,2-diaminoethane, 1,3-diaminopropane, 1,4-diaminobutane, 1,6-diaminohexane, 2,5-dimethyl-2,5-di-aminohexane, 1,7-diaminoheptane, 1,8-diaminooctane, 1,10-di-aminodecane and poly-ethyleneoxide primary diamines, for example having a molecular weight of from 600 to 6000.

Quaternization can be effected by known methods, for example by reaction with an organic and/or an inorganic acid. In general the reaction will be effected to neutralize substantially all of the amino groups present in the epoxy resin following reaction with the various amines. Examples of acids which can be used include, orthophosphoric acid, methanesulfonic acid, p-toluene sulfonic acid, acetic acid, acrylic acid, methacrylic acid, maleic acid, and mixtures thereof.

If desired, a hydrophillic ultraviolet curable monomer and/or a water-miscible organic solvent can be present in addition to the secondary amine and the epoxy acrylate or methacrylate during the second reaction step.

Water soluble, radiation curable oligomers in accordance with the invention can be used as the sole binder in radiation curable varnish or lacquer formulations, or they can be used in compositions containing a colorant, e.g. a dry pigment or a dye, for example to form an ink.

Compositions of the present invention can be used to overcoat virgin or pre-printed paper or card stock, and they can be applied by a variety of techniques, for example by flexography, offset varnishing, rollercoating or screen printing. Furthermore, since the oligomers of the present invention are usually completely water-soluble, the equipment used can usually be cleaned using water alone, thereby avoiding or at least reducing the use of organic solvents.

The formulation used in any particular coating process will, in general, be adjusted to the particular process. Examples of coating processes which can be used include flexographic, offset varnish, rollercoating or screen processes.

In addition to the ability to clean up coating apparatus using water, compositions of the present invention have also shown good coatability, gloss and durability.

Compositions in accordance with the present invention preferably contain from 10 to 70 percent by weight of a water soluble, radiation curable oligomer in accordance with the present invention.

Examples of monomers which can be included in compositions of the present invention include straight and branched chain alkyl acrylates, e.g. iso-bornyl acrylate, iso-decyl acrylate, octadecyl acrylate, lauryl acrylate, stearyl acrylate or 1,6-hexanediol diacrylate; polyether diacrylates, e.g. polyethylene glycol diacrylates with four ethyleneoxy groups, alkyleneoxy diacrylates, e.g. triethylene glycol diacrylate, tripropylene glycol diacrlyate or propoxylated neopently glycol diacrylate; and acrylates of triols and alkoxy extended triols, e.g. trimethylol propane triacrylate. The mono- and multifunctional acrylate monomer is preferably present in an amount of from 20 to 80 percent based on the composition.

The photoinitiator should be capable of producing free radicals, preferably on irradiation with ultraviolet light. Examples of photoinitiators which can be used include diphenyl ketone, benzophenone, benzoin, benzoin ethyl ether, benzoin methyl ether, acyl phosphine oxides, thioxanthone, acyl ketones, and derivatives thereof. It is particularly preferred to use a mixture of diphenyl ketone and mixed acyl ketones in a ratio of about 2:1 as the photoinitiator in the presence of a mono- functional tertiary amine, with the ratio of initiator to amine being about 2:1.

Compositions in accordance with the present invention preferably include a tertiary amine, such amines generally serving to increase the response time of the compositions to radiation curing, and in the case of clear varnish formulations surface bloom can be reduced or even avoided by their use.

Compositions in accordance with the present invention in the form of varnishes can be used to produce a good gloss finish, for example to display cards, record sleeves, book jackets and other display and promotional materials. Compositions in the form of inks have been found of particular use in producing decorative and display materials, and these may in turn be over-varnished, preferably using a composition in accordance with the invention in the form of a varnish. When a colorant is present, it will usually represent from 1 to 30 percent by weight of the composition.

Compositions in accordance with the invention can include other materials, for example as are conventionally used in varnish and ink compositions. Such materials include, for example, flow controllers, e.g. poly-(butyl acrylates), silicone fluids, wetting agents and fumed silica.

Compositions in accordance with the present invention can be applied and cured using known methods, for example they can be applied by roller coating or screen printing. The compositions are preferably photocurable, especially by exposure to ultraviolet light.

The following Examples are given by way of illustration only. All parts are percentages by weight of the total compositions unless stated otherwise.

### Example 1

180g of ethoxylated trimethylol propane triacrylate, 380g of polyglycol diepoxide (DER 736 - Dow Chemicals), 380g of Bisphenol A type diglycidyl ether (Araldite GY250 - Ciba Geigy), 6.6g of 2,6-di-(tert-butyl)-4-methylphenol and 1.32g of a 5% solution of chromium metal as the naphthenate in white spirit were charged to a 1 liter reaction flask. The mixture was sparged with dry air for 10 minutes and then heated to a temperature of 95-100°C. 72g of acrylic acid were then added to the mixture in six equal portions over a period of 30 minutes, and the mixture was then heated to 110°C and held at that temperature until the acid value of the mixture was less than 2mg KOH/g.

The mixture was cooled to a temperature of from 50 to 60°C, following which 129.4g of N,N-di-(n-butyl)amine were added in six equal portions over a period of 30 minutes.

After a further period of one hour at 60°C, 58g of 1,6-di-aminohexane were added in six equal portions over a period of 30 minutes. The mixture was then maintained at 60°C for a period of one hour.

120g of N,N-di-(n-butyl)amine were added, and the temperature of the mixture was increased to 80°C. This temperature was maintained until the epoxy value of the mixture remained constant, the amine value of the mixture at that stage being 112.7mg KOH/g. 190g of acrylic acid were added dropwise to effect neutralisation of 90% of the basic sites on the oligomer, 133g of nonylphenyl ethoxylate (surfactant - Synperonic NP13) also being added to assist the aqueous solubility of the oligomer.

### Example 2

178.2g of ethoxylated trimethylol propane triacrylate, 429.1g of Bisphenol A type diglycidyl ether (Araldite GY250 - Ciba Geigy), 4.45g of 2,6-di-(tert-butyl)-4-methylphenol and 0.89g of a 5% solution of chromium metal as the naphthenate in white spirit were charged to a 2 liter reaction flask. The mixture was agitated and sparged with dry air for 10 minuted before being heated to 95-100°C. 40.6g of acrylic acid were then added in six equal portions over a period of 30 minutes, and the temperature of the mixture was raised to 110°C. These reaction conditions were maintained until the acid value of the mixture had fallen to less than 2mg KOH/g.

The reaction mixture was cooled to 50-60°C and 73.1g of N,N-di-(n-butyl)amine were added in six equal portions over a period of 30 minutes. After a further hour at 60°C, 170g of a polyethylene oxide primary diamine (Jeffamine ED600 - Texaco) were added in six equal portions over a period of 30 minutes. The temperature of the mixture was maintained at 60°C for a further hour, following which 89.1g of N,N-di-(n-butyl)amine were added in six equal portions over a period of 30 minutes.

The mixture was then heated to 80°C and maintained at that temperature until the epoxy value remained constant. The theoretical amine value of the oligomer was 94.45mg KOH/g. 118.1g of acrylic acid were added dropwise to effect neutralisation, 96.3g of surfactant (Synperonic NP13) having been added to aid dispersability.

### Example 3

273g of ethoxylated glycerol triacrylate, 550g of Bisphenol A type diglycidyl ether (Araldite GY250 - Ciba Geigy), 5.9g of 2,6-di-(tert-butyl)-4-methylphenol) and 1.18g of a 5% solution of chromium metal as the naphthenate in white spirit were charged to a 2 liter reaction flask. The mixture was agitated and sparged with dry air for 10 minutes before being heated to 95-100°C. 52.1g of acrylic acid were then added in six equal portions over a period of 30 minutes, and the temperature of the mixture was raised to 110°C. These reaction conditions were maintained until the acid value of the mixture had fallen to less than 2mg KOH/g.

The reaction mixture was cooled to 50-60°C and 73.1g of N,N-di-(iso-propyl)amine were added in six equal portions over a period of 30 minutes. After a further hour at 60°C, 326g of a polyethylene oxide primary diamine (Jeffamine ED600 - Texaco) were added in six equal portions over a period of 30 minutes. The temperature of the mixture was maintained a 60°C for a further hour, following which 89.2g of N,N-di-(iso-propyl)amine were added in six equal portions over a period of 30 minutes.

The mixture was then heated to 80°C and maintained at that temperature until the epoxy value remained constant. The theoretical amine value of the oligomer was 87.2mg KOH/g. 180.4g of acrylic acid were added dropwise to effect neutralisation, 136g of surfactant (Synperonic NP13) having been added to aid dispersability.

### Example 4

178.2g of ethoxylated trimethylol propane triacrylate, 429.1g of Bisphenol A type diglycidyl ether (Araldite GY250 - Ciba Geigy) and 0.89g of a 5% solution of chromium metal as the naphthenate in white spirit were charged to a 2 liter reaction flask. The mixture was agitated and sparged with dry air for 10 minuted before being heated to 95-100°C. 40.6g of acrylic acid were then added in six equal portions over a period of 30 minutes, and the temperature of the mixture was raised to 110°C. These reaction conditions were maintained until the acid value of the mixture had fallen to less than 2mg KOH/g.

The reaction mixture was cooled to 55-60°C and 73.1g of N,N-di-(n-butyl)amine were added in six equal portions over a period of 30 minutes. After a further hour at 60°C, 170g of a polyethylene oxide primary diamine (Jeffamine ED600 - Texaco) were added in six equal portions over a period of 30 minutes. The temperature of the mixture was maintained at 60°C for a further hour, following which 89.1g of N,N-di-(n-butyl)amine were added in six equal portions over a period of 30 minutes.

The mixture was then heated to 80°C and maintained at that temperature until the epoxy value remained constant. The theoretical amine value of the oligomer was 94.45mg KOH/g. The solubility of the oligomer in water was zero to negligible.

### Example 5

424.7g of polyglycol diepoxide (DER 736 - Dow Chemicals), 252.2g of Bisphenol A type diglycidyl ether (Araldite GY250 - Ciba Geigy), 208.7g of ethoxylated trimethylol propane triacrylate, 4.91g of 2,6-di-(tert-butyl)-4-methylphenol) and 0.98g of a 5% solution of chromium metal as the naphthenate in white spirit were charged to a 2 liter reaction flask. The mixture was agitated and sparged with dry air for 10 minutes before being heated to 95-100°C. 95.6g of acrylic acid were then added in six equal portions over a period of 30 minutes, and the temperature of the mixture was raised to 110°C. These reaction conditions were maintained until the acid value of the mixture had fallen to less than 2mg KOH/g.

The reaction mixture was cooled to 50-60°C and 62.4g of 1,6-diaminohexane were added in six equal portions over a period of 30 minutes. After a further hour at 60°C, the mixture was heated to 80°C and maintained at that temperature until the epoxy value remained constant. The theoretical amine value of the oligomer was 44.6mg KOH/g. 52g of methacrylic acid were added dropwise to effect neutralisation, 104g of surfactant (Synperonic NP13) having previously been added. The solubility of the oligomer in water was zero to negligible.

### Example 6

A varnish composition was prepared by mixing the following ingredients using a high speed mechanical stirrer:-

| | |
|---|---|
| Epoxy ionomer from Example 1 | 30 parts |
| Tripropylene glycol diacrylate | 61 parts |
| Benzophenone (Blagdon Chemicals) | 4 parts |
| Tertiary amine (Photomer 4182 - Harcros Chemicals) | 2 parts |
| Wetting agent (Pentrone A4D - ABM Chemicals) | 0.5 part |
| Silicone fluid (F111/1000 - ICI Chemicals) | 2.5 parts |

This composition had a viscosity of 39 seconds as measured using a Ford No.4 cup.

Using a laboratory roller coating machine having a 35.6cm long and 10.16cm diameter neoprene coating roller, this composition was applied to a preprinted medium weight card. The wet coating thickness was between 4 and 6 microns.

The coating on the card was cured using a conveyorized ultraviolet curing unit having two medium pressure mercury vapor lamps with a predominant output at a wavelength of 350nm and with a conveyer speed of 20m/min which equated with an energy level at the coating surface of 280mJ/cm².

The card following curing of the coating exhibited a high level of gloss with excellent surface wetting and coatability without degradation of the original surface of the printed card, i.e. without discoloration, rewetting or smearing.

No adverse effects were noted during the coating process, for example in the form of spray, misting, fly or droplet formation.

The coating equipment and accessories were easily cleaned of unused composition, and they were washed fully clean using ordinary tap water without the use of non-aqueous solvents or other agents.

### Example 7

A varnish composition was prepared using the method of Example 6, the formulation being identical to that of Example 6 except that the epoxy ionomer was the product of Example 2. The composition had a viscosity of 35 seconds as measured using a Ford No.4 cup.

The composition was applied to printed card as described in Example 6, the results being comparable to those for the composition of Example 6.

### Example 8

A varnish composition was prepared using the method of Example 6, the formulation being identical to that of Example 6 except that the epoxy ionomer was the product of Example 3. The composition had a viscosity of 44 seconds as measured using a ford No.4 cup.

The composition was applied to printed card as described in Example 6, the results being comparable to those for the composition of Example 6.

### Example 9

A varnish composition was prepared using the method of Example 6, the formulation being identical to that of Example 6 except that the tripropylene glycol diacrylate was replaced by a difunctional acrylate monomer (Photomer 4193 - Harcros Chemicals). The composition had a viscosity of 35 seconds as measured using a ford No.4 cup.

The composition was applied to printed card as described in Example 6, the results being comparable to those for the composition of Example 6.

### Example 10

A varnish composition was prepared using the method of Example 6, the formulation being identical to that of Example 6 except that the epoxy ionomer was the product of Example 2 and the tripropylene glycol diacrylate was replaced by a difunctional acrylate monomer (Photomer 4193 - Harcros Chemicals).

The composition was applied to printed card as described in Example 6, the results being comparable to those for the composition of Example 6.

### Example 11

A varnish composition was prepared using the method of Example 6, the formulation being identical to that of Example 6 except that the epoxy ionomer was the product of Example 3 and the tripropylene glycol diacrylate was replaced by a difunctional acrylate monomer (Photomer 4193 - Harcros Chemicals). The composition had a viscosity of 38 seconds as measured by a ford No.4 cup.

The composition was applied to printed card as described in Example 6, the results being comparable to those for the composition of Example 6.

### Example 12

A varnish composition was prepared using the method of Example 6, the formulation being identical to that of Example 6 except that the epoxy ionomer was the product of Example 4. The composition had a viscosity of 38 seconds as measured by a ford No.4 cup.

The composition was applied to printed card as described in Example 6. However, attempts to remove the composition from the coating apparatus with water or water/detergent mixtures were unsuccessful, milky deposits of the varnish being formed. Non-aqueous solvents had to be used to remove the composition.

### Example 13

A varnish composition was prepared using the method of Example 6, the formulation being identical to that of Example 6 except that the epoxy ionomer was the product of Example 5.

The composition had a viscosity of 38 seconds as measured by a ford No.4 cup.

The composition was applied to printed card as described in Example 6. The results were comparable to those observed with the composition of Example 12.

### Example 14

An ink composition was prepared by mixing the following ingredients, except the pigment, using a high speed disperser, and thereafter dispersing the pigment in the resulting mixture using a roller mill:-

| | |
|---|---|
| Epoxy ionomer from Example 1 | 60 parts |
| 1,6-di-Hydroxyhexane diacrylate | 20 parts |
| iso-Propyl thioxanthone (ex - IBIS) | 10 parts |
| Pigment Red 2 | 4 parts |
| Fumed silica (Aerosil 200 - Degussa) | 2 parts |
| Flow controller (Multiflow - Monsanto) | 2 parts |
| Silicone fluid (F111/1000 - ICI Chemicals) | 2 parts |

The resulting ink was printed by screen printing on to a medium weight art paper using a polyurethane squeegee and a 150 mesh screen in a Svecia semi-automatic flat bed printer. The resulting prints were cured by exposure to ultraviolet light from a pair of 80W/cm medium pressure mercury vapor lamps having a spectral output predominantly at 284 and 365nm to give 250mJ/cm² at the ink surface.

Adhesion, bleed and curl were assessed, as was the ease of wash-up, and the results are given in the accompanying Table.

### Example 15

An ink composition was prepared as described in Example 14, but with the epoxy ionomer of Example 1 being replaced by the epoxy ionomer of Example 2. The ink was used for printing and was cured as described in Example 14. The results achieved are given in the accompanying Table.

### Example 16

An ink composition was prepared as described in Example 14, but with the epoxy ionomer of Example 1 being replaced by the epoxy ionomer of Example 3. The ink was used for printing and was cured as described in Example 14. The results achieved are given in the accompanying Table.

### Example 17

An ink composition was prepared as described in Example 14, but with the epoxy ionomer of Example 1 being replaced by the epoxy ionomer of Example 4. The ink was used for printing and was cured as described in Example 14. The results achieved are given in the accompanying Table.

### Example 18

An ink composition was prepared as described in Example 14, but with the epoxy ionomer of Example 1 being replaced by the product of Example 5. The ink was used for printing and was cured as described in Example 14. The results achieved are given in the accompanying Table.

**TABLE**

| Ex. | Gloss | Adhesion | Bleed | Curl | Coatability | Water Wash-up |
|---|---|---|---|---|---|---|
| 6 | 5 | 5 | 5 | 5 | 5 | 5 |
| 7 | 5 | 5 | 5 | 5 | 5 | 5 |
| 8 | 5 | 5 | 5 | 5 | 5 | 5 |
| 9 | 5 | 5 | 5 | 5 | 5 | 5 |
| 10 | 5 | 5 | 5 | 5 | 5 | 5 |
| 11 | 5 | 5 | 5 | 5 | 5 | 5 |
| 12 | 5 | 5 | 5 | 5 | 5 | 0 |
| 13 | 5 | 5 | 5 | 5 | 5 | 0 |
| 14 | 5 | 5 | 5 | 5 | 5 | 5 |
| 15 | 5 | 5 | 5 | 5 | 5 | 5 |
| 16 | 5 | 5 | 5 | 5 | 5 | 5 |
| 17 | 5 | 5 | 5 | 5 | 5 | 0 |
| 18 | 5 | 5 | 5 | 5 | 5 | 0 |

In the Table, on a scale of 0-5, 5 represents excellent and 0 represents very poor.

The data in the Table show that water wash up was very poor when the epoxy oligomer itself had poor solubility.

## Claims

1. Water soluble, radiation curable, esterified epoxy oligomers including acrylate or methacrylate groups.

2. Epoxy oligomers according to claim 1, wherein the epoxy groups have been at least partially reacted with an amine.

3. Epoxy oligomers according to claim 2, wherein at least some of the amino groups derived from the said amine have been quaternized.

4. Epoxy oligomers according to claim 3, wherein the quaternization has been effected by acrylic or methacrylic acid.

5. Epoxy oligomers according to claim 1 or claim 2, wherein the amino groups form linkages between residues of an epoxide.

6. A process for producing a water soluble, radiation curable esterified epoxy oligomers including acrylate or methacrylate groups, the method comprising reacting an epoxy acrylate or an epoxy methacrylate with a secondary amine to leave unreacted epoxy groups, reacting unreacted epoxy groups in the product with a primary di-amine, thereafter reacting the product with a secondary amine to effect substantially complete reaction of the epoxy groups, and then quaternizing the product.

7. A process according to claim 6, wherein the epoxy acrylate or epoxy methacrylate has been formed by reacting a difunctional epoxide with acrylic or methacrylic acid.

8. A process according to claim 7, wherein the difunctional epoxide comprises a Bisphenol A, Bisphenol F or Bisphenol S type polymer.

9. A radiation curable composition comprising:-
(a) a water soluble, radiation curable, esterified epoxy oligomer including acrylate or methacrylate groups;
(b) a mono- and/or a multi-functional monomer;
(c) a free radical initiator;
(d) an optional pigment or dyestuff colorant; and
(e) an optional amine acrylate photo accelerator.

10. A composition according to to claim 9, wherein the composition contains from 10 to 70 percent by weight of a water soluble, radiation curable esterified epoxy oligomer.

11. A composition according to claim 9 or claim 10, wherein the free radical initiator is present in an amount of up to 10 percent by weight of the composition.

12. A composition according to any of claims 9 to 11, including an amine acrylate, preferably a tertiary amine acrylate.

13. A composition according to claim 12, wherein the weight ratio of photoinitiator to amine acrylate is about 2:1.

14. A composition according to any of claims 9 to 13, in the form of a varnish.

15. A composition according to any of the preceding claims, including a colorant.

16. A composition according to claim 15, wherein the colorant is present in an amount of from 1 to 30 percent by weight of the composition.

17. A composition according to claim 15 or claim 16, in the form of an ink.

18. A method of forming a photocured coating on a substrate, the method comprising applying a coating of a composition according to any of claims 8 to 16 on the substrate, and exposing the coating to ultraviolet light.

19. A method according to claim 18, wherein the substrate comprises paper or card.
